# EUROPEAN PATENT APPLICATION

(11) **EP 2 450 635 A1**
(43) Date of publication of application: **09.05.2012**
(21) Application number: 10251895.8
(22) Date of filing: 03.11.2010
(51) Int. Cl.: F24D 3/08, F24D 11/00, F24D 19/10

(54) **Solar heating system**

(71) Applicant: Spoto, Franco, Potters Bar Hertfordshire EN6 2DZ (GB); Baffa, Genarro, Potters Bar Hertfordshire EN6 2DZ (GB)
(72) Inventor: Spoto, Franco, Potters Bar Hertfordshire EN6 2DZ (GB)
(74) Representative: Whitaker, Iain Mark

(57) **Abstract**

The present invention provides system for direct solar heating of water for hot water supply and space heating, the system having: a first water tank to receive cold water and having a hot water outlet connected to supply hot water to one or more distributed hot water consumer supply taps, the tank containing a heat exchange coil connected to a circuit incorporating at least one solar panel; and a second water tank to receive cold water and having a water outlet connected to supply hot water to one or more heat delivering elements of a space heating circuit, the second water tank having a heat exchange coil connected to a circuit incorporating at least one solar panel, wherein the water level in the first water tank is regulated by a water level regulator to be replenished with cold water to remain at a high level during daytime and to be replenished to remain at a substantially lower level during nighttime.

## Description

### Field of the Invention

The present invention concerns improvements in and relating to systems for solar heating of water primarily but not necessarily exclusively for localized hot water supply and space heating of domestic/ office/ commercial premises.

### Background to the Invention

As is now abundantly clear, there is very strong need for us all to reduce our carbon footprint as far as is practically possible. On the one hand we have diminishing fossil fuel reserves and correspondingly increasing fuel prices and on the other hand any use of those fossil fuel reserves leads to carbon dioxide emissions and concomitant increased risk of global warming. An important aspect of reducing carbon footprint is to reduce use of fossil fuels in heating the home or heating the domestic hot water supply.

Direct solar heating of water for hot water supply in hotels and domestic buildings has become an important source of hot water in those parts of Europe with high annual sunshine. Whereas solar cell panels for electricity remain relatively expensive to purchase and install and take a substantial number of years to recover their cost, the solar panel plate or tube arrays for direct solar heating of water are substantially more economical than solar cell panels.

Some efforts have been made in recent years seeking to tailor such solar water heating systems to better suit the needs of the more northerly countries where not only are sunlight hours lower and less reliable but also traditionally domestic hot water supply is often integrated with the central heating/ space heating. In general, for simplicity the direct solar heating system is kept separate from any space heating system and the two are run in parallel. Some have tried to integrate direct solar heating into combined water and space heating systems but problems have arisen in maintaining balance between the demands of each part of the system. An example such system is disclosed in GB 2,431,228. An example of a system that integrates the two but heats the tap water indirectly through a second tubing coil that passes through a tap water heating cylinder is disclosed in EP1,947,394. This system avoids some of the balancing issues with regard to availability of tap water but has thermal transfer inefficiencies, lacks some convenience and fails to capitalize fully on the solar heating of the water for domestic supply.

To address these general problems amongst others the applicants of the present application have developed a new system for direct solar heating of water for hot water supply and space heating that incorporates a simple yet ingenious balancing mechanism.

### Summary of the Invention

According to a first aspect of the present invention there is provided a system for direct solar heating of water for hot water supply and space heating, the system having: a first water tank (or 'cylinder') to receive cold water and having a hot water outlet connected to supply hot water to one or more distributed hot water consumer supply taps (ie supplying hot water to baths, basins or showers etc) of a building, the tank containing a heat exchange coil connected to a circuit incorporating at least one solar panel, and preferably also a second heating source comprising an immersion coil and/or a second heat exchange coil connected to a circuit incorporating a fuel fired boiler; and a second water tank to receive cold water and having a water outlet connected to supply hot water to one or more heat delivering elements (eg radiators or underfloor heating array) of a space heating circuit, the second water tank having a heat exchange coil connected to a circuit incorporating at least one solar panel, and preferably also a second heating source comprising an immersion coil and/or a second heat exchange coil connected to a circuit incorporating a fuel fired boiler, wherein the water level in the first water tank is regulated by a water level regulator to be replenished with cold water to remain at a high level (eg 200 litres) during daytime and to only be replenished to remain at a substantially lower level (eg 50 litres) during nighttime whereby less fuel or electric heating is required to maintain a suitable temperature of the hot water supply to the hot water supply taps at nighttime.

Preferably the water level regulator comprises a solar breaker switch to switch off primary cold water supply to the first tank at night. A ball cock valve may be provided in the first tank to regulate night time replenishment to the required lower level.

Particularly preferably the solar panel is in a circuit that comprises a heat exchange coil in each of the first and second tanks and preferably heated fluid from the solar panel flows first to the heat exchange coil in the first tank and then to the heat exchange coil in the second tank before returning to the solar panel to be heated further.

### Brief Description of the Drawings

This invention will now be further described, by way of example only, with reference to the accompanying drawings, in which:

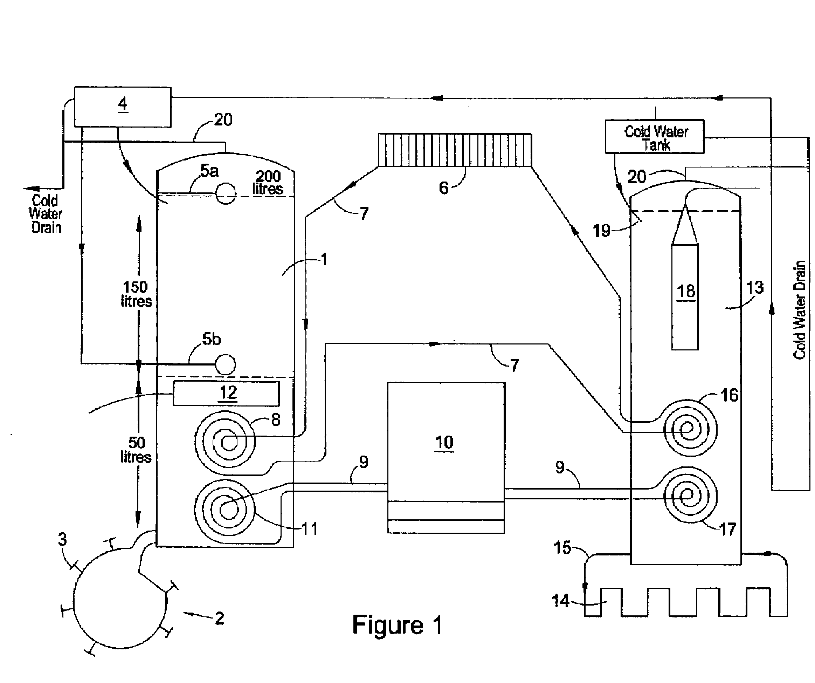

Figure 1 is a schematic diagram of the preferred layout of the heating system of the preferred embodiment.

### Description of the Preferred Embodiment

Referring to Figure 1, in the illustrated embodiment the heating system comprises two thermal insulation lagged hot water-containing cylinders, the first of which is a hot water storage tank 1 for supply of hot water via a circuit 2 to each of a plurality of hot water taps 3 in a building. These taps 3 are distributed hot water consumer supply taps 3 that supply hot water to baths, basins or showers etc around the building and are connected back to the first tank 1 so that the heat is delivered substantially more evenly to all taps and hot water is substantially instantaneously available to the taps. The first hot water storage tank 1 is supplied with fresh cold water from a cold water tank 4 or from an adequately pressured mains water supply. The flow of cold water into the tank to replenish water drawn by the taps 3 is controlled by a pair of ball cock valves 5a,5b. An upper ball cock valve 5a is positioned near the top of the tank 1 to keep the water level in the tank at about 200 litres during the day. A solar breaker switch 20 overrides the upper ball cock valve 5a to stop water flow through its inlet into the tank 1 when night falls. A lower ball cock valve 5b is positioned nearer the lower end of the tank 1 in order to keep the level of water in the tank at a minimum of 50 litres, so that even during the night if the demand for hot tap water should cause the tank 1 to be drained to begin to fall below 50 litres, cold water will again be added to the tank, through the lower ball cock valve 5b and the tank will not run dry.

The water within the tank 1 is heated during the day by a solar panel 6 that forms part of a solar heating fluid circuit 7. The solar heating circuit 7 is connected to a heat exchange coil 8 that is installed in the tank 1. A heat collection fluid having suitable thermal properties ie high thermal capacity for heat capture and transfer and having a low freezing point or anti-freeze component, eg water with ethylene glycol, circulates within the circuit 7 and is heated within the solar panel / solar collector 6. The solar panel / solar collector 6 may be of any suitable form and commonly resembles a radiator, having a substantially flat array of linked parallel pipes /tubes through which the heat collection fluid flows. This circuit 7 may require topping up with additional heat collection fluid and so may have a tank or at least an inlet for this purpose.

Since the availability of solar heating is predicate on sunlight, as with the majority of existing systems the system of the present invention suitably has a fuel-powered boiler sub-system/ circuit 9 incorporating a boiler 10 and connected to a second heat exchanger 11 installed in the tank 1 to heat the water in the tank 1 at nighttime or otherwise when needed to raise its temperature to the required level when there is inadequate or zero heating available from the solar heating circuit 7. As a further or alternative source of heating to the fuel-powered boiler sub-system/ circuit 9, the tank 1 may have an electric immersion heater coil 12 installed in it, as illustrated. Again in common with the existing systems, the system suitably has water temperature sensors and switches to control the operation of the electric immersion heater coil 12 and boiler 10.

In parallel to the first tank 1 and its circuit of linked hot water taps, the system further comprises a second, smaller hot water storage tank 13, suitably having a capacity of the order of 50 litres, that is used to supply hot water to space heating elements 14 such as radiators or underfloor heating forming part of a space heating circuit 15. This second tank 13 has broadly the same heating inputs as the first tank 1, including having a heat exchange coil 16 connected into the solar heating circuit 7 and a second heat exchange coil 17 connected into the boiler circuit 10. The solar heating of both tapwater and space heating water are thus integrated. A respective electric immersion heater coil 18 is also provided in the second tank 13.

The solar heated heat collection fluid in the solar heating circuit 7 flows from the solar collector/ solar panel 6 firstly through the heat exchange coil 8 of the first hot water storage tank 1 before then flowing through the heat exchange coil 16 of the second hot water storage tank 13. Accordingly, the 200 litres (daytime) or 50 litres (night time) of stored tapwater in first tank 1 is heated preferentially over the 50 litres of stored space heating water in second tank 13.

Cold water may be supplied to the second hot water storage tank 13 via an inlet 19 at the top of the tank 13 and air may also be vented from the tank 13 at or near its apex 20. However, unlike the first tank 1, the second tank 13 is effectively in a closed circuit to the extent that hot water is not being drained by the radiators etc but simply circulated around the space heating circuit 15. Accordingly there is minimal requirement for replenishment of water in the second tank 13.

The combined hot water and space heating system of the present invention provides hot tap water on demand from storage that is heated primarily by solar heating with generally very little energy input required from burning of fossil fuels in the boiler 10 or operation of the electrical immersion heater coil 12. By maximizing the storage capacity for water in the hot water tank 1 during the daytime when solar heating is available and limiting replenishment of the water in the tank 1 from cold water supplies at night, better use is made of the heat from the solar heating circuit 7 making less demand on the boiler 10 or coil 12 for water heating. The dual hot water storage tanks 1, 13 both heated during the day by the solar heating circuit 7 give preference to the hot tap water supply over space heating and the tap water is heated directly by a heat exchange coil 8 of the solar heating circuit 7 and not by a secondary (branch circuit) coil.

This better suits the demand patterns for consumers in the UK, for example, since for a major part of the year the solar heating will totally replace need for use of any fuel in heating water. In summer space heating is rarely important at all but demand for the hot tap water is broadly constant throughout the year and solar heating is best used primarily for hot water supply

## Claims

1. A system for direct solar heating of water for hot water supply and space heating, the system having: a first water tank to receive cold water and having a hot water outlet connected to supply hot water to one or more distributed hot water consumer supply taps, the tank containing a heat exchange coil connected to a circuit incorporating at least one solar panel; and a second water tank to receive cold water and having a water outlet connected to supply hot water to one or more heat delivering elements of a space heating circuit, the second water tank having a heat exchange coil connected to a circuit incorporating at least one solar panel, wherein the water level in the first water tank is regulated by a water level regulator to be replenished with cold water to remain at a high level during daytime and to be replenished to a substantially lower level during nighttime.

2. A system as claimed in claim 1, wherein the water level regulator comprises a solar breaker switch to switch off primary cold water supply to the first tank at night.

3. A system as claimed in claim 1 or 2, wherein a ball cock valve is provided in the first tank to regulate night time replenishment to the required lower level.

4. A system as claimed in claim 3, wherein the solar panel is in a circuit that comprises a heat exchange coil in each of the first and second tanks.

5. A system as claimed in claim 4, wherein heated fluid from the solar panel flows first to the heat exchange coil in the first tank and then to the heat exchange coil in the second tank before returning to the solar panel to be heated further.

6. A system as claimed in any preceding claim, wherein the first tank and/ or second tank contains a second heating source comprising an immersion coil and/or a second heat exchange coil connected to a circuit incorporating a fuel fired boiler.

7. A system as claimed in any preceding claim, wherein the water in the first tank is heated directly by the solar heating circuit, the heat collection fluid of the solar heating circuit flowing through the heat exchange coil in the first tank.

8. A system for direct solar heating of water for hot water supply and space heating, the system having: a first water tank to receive cold water and having a hot water outlet connected to supply hot water to one or more distributed hot water consumer supply taps, the tank containing a heat exchange coil connected to a circuit incorporating at least one solar panel; and a second water tank to receive cold water and having a water outlet connected to supply hot water to one or more heat delivering elements of a space heating circuit, the second water tank having a heat exchange coil connected to a circuit incorporating at least one solar panel, wherein the water in the first tank is heated directly by the solar heating circuit, the heat collection fluid of the solar heating circuit flowing through the heat exchange coil in the first tank.
